# EUROPEAN PATENT SPECIFICATION

(11) **EP 2 882 307 B1**
(45) Date of publication and mention of the grant of the patent: **13.12.2017**
(21) Application number: 13773325.9
(22) Date of filing: 31.07.2013
(51) Int. Cl.: A24B 15/28, A24B 15/30, A24B 15/24, A24B 1/00

(54) **METHOD FOR MAKING LOW NITROSAMINE CONTENTS TOBACCO**
VERFAHREN ZUR HERSTELLUNG EINES TABAKS MIT NIEDRIGEM NITROSAMINGEHALT
PROCÉDÉ DE FABRICATION D'UN TABAC À BASSES TENEURS EN NITROSAMINES

(30) Priority: 08.08.2012 IT MI20121419
(43) Date of publication of application: 17.06.2015
(73) Proprietor: Gruppo Mauro Saviola S.r.l., 46019 Viadana (MN) (IT); FAT - Fattoria Autonoma Tabacchi Scarl, 06012 Citta' Di Castello (PG) (IT)
(72) Inventor: MIELE, Sergio, I-56123 Pisa (IT); ROMANI, Annalisa, I-51031 San Michele Agliana (PT) (IT); BARGIACCHI, Enrica, I-57016 Rosignano Marittimo (LI) (IT); CAMPO, Margherita, I-50127 Firenze (IT)
(74) Representative: Rastelli, Franco
(86) International application number: PCT/IB2013/001679
(87) International publication number: WO 2014/024020

(56) References cited:
- WO-A2-2004/068973
- FR-A1- 2 748 907
- US-A- 3 612 066
- US-A1- 2011 083 683

## Description

### BACKGROUND OF THE INVENTION

The present invention relates to a method for making tobacco.

More specifically, the present invention relates to a method for reducing the tobacco specific nitrosamine concentration (TSNA = Tobacco Specific NitrosAmines).

As is known, nitrosamines are considered as carcinogenic substances (IARC Monographs vol. 89), and the reduction of nitrosamine concentration is a primary objective of studies and researches for reducing damages due to tobacco consumption in general and, in particular, from smoked tobacco.

The tobacco specific nitrosamines (TSNA) studied are mainly four: NNN (N2-NitrosoNorNicotine), NNK (4-(methylnitrosamino)-1-(3-piridyl)-1-butanone), NAB (N2-NitrosoAnaBasine) and NAT (N2-NitrosoAnaTabine).

The present invention is not limited to the above specific nitrosamines, but considers, by similitude, all nitrosamines which are present in tobacco in a green or neoformed state, through several forming mechanisms, in the post-harvesting period, i.e. in the period from the tobacco harvesting and curing, and from the tobacco curing, fermentation or ageing and storing thereof, up to the manufacturing stage of the smoked products or tobacco-based products for direct consumption.

The above nitrosamines are formed because of the reaction between the tobacco alkaloids and several nitrogen compounds (nitrates, nitrites, NOx), controlled by temperature, moisture and bacteria responsible for the tobacco nitrate reductasic activity under anaerobic conditions.

The nitrosamine problem affects all tobacco types: air-cured as Burley, flue-cured as Virginia Bright and fire-cured as Kentucky, and this only to mention the main tobacco types and without excluding other types.

However, the above mentioned problem has been mainly studied in Burley and dark tobaccos, as a consequence of genetic factors (the so-called "converter" lines, where nicotine tends to transform into nornicotine), agronomics (an excess of nitrogen fertilizing), curing conditions (in particular between turning yellow and drying) and storing (temperature, removal of stalks from the leaves, and so on) which tend to cause an accumulation of TSNA.

Within the sphere of the possible methods for reducing the production of nitrosamine in tobacco, mechanical stress inducing methods have been proposed such as the cutting of the roots [Qi Li et al. in: J. Agronomy & Crop Science 192, 267-277 (2006)], or annular incisions of the xylem [Krauss et al. US Pat. US 2003/0056801], adapted to stimulate the production of endogen anti-oxidants substance production.

However, the results of the above searches, because of the inconsistency of the results achieved and the operating costs related to the technical proposals, have not found useful applications.

Alternatively, on the (air cured) Burley tobacco, good results have been achieved by treating said tobacco by UV [Krauss et al. US 2006/0016125], probably designed to provide a certain degree of cleansing of the tobacco leaves from bacteria responsible for the nitrate-reductase action.

However, even in the above case, an operating and economic impracticability has hindered their diffusion.

In some cases, also other applications, based on several modes of operation, of exogenous origin anti-oxidating substances have been proposed.

The above antioxidating substances are considered as inhibiting nitrosamine formation by operating as "cleaners" with respect to nitrites, formed in tobacco curing and preserving, which promote the reaction generating nitrosamines.

In this connection, it should be pointed out that green tobacco leaves contain significant tocopherol and polyphenol amounts, which may limit the TSNA formation.

For example, in Virginia Bright tobacco, 28.7% of the overall anti-oxidating capability consists of chlorogenic acid and 11.5% of rutin, whereas in Burley, the above rates decrease to 13,4% and 6,2% respectively.

However, the above substances tend to be lost in tobacco curing: from 50 to 80% in the first 14 days in Burley, in which the chlorogenic acid and rutin concentrations decrease to less than 15% in comparison with the contents at the harvesting (Li et al., 2006).

Within the range of exogenous anti-oxidating substances, the patent literature has examined anti-oxidating mixtures, of an unspecified nature, in combination with sodium bicarbonate, ascorbic acid, glutathione and selenium

(Krauss et al., in US 2003/0056801 A1 of March 27, 2003) or ferulic acid and esters thereof (Thomas et al., in US 7,757,697 B2 of July 20, 2012), which are applied both in the pre- and in the post-harvesting tobacco operations, in an alcoholic solution and surface-active agent mixture.

However, the patent discoveries up to now have not generated commercial processes since the application making modes and their cost, also related to a use of pharmaceutical degree anti-oxidating materials, have not been capable of providing treating processes exploitable from a technical and economic result standpoint.

This practical result has been further stressed in the 242^{nd} ACS National Meeting, which started its works on August 28, 2011 at Denver (CO) - US, with a document titled "Carcinogenic nitrosamines in U.S. cigarettes: Three decades of remarkable neglect by the tobacco industry", where mention is specifically made of an "apparent lack of effort to control the levels of these carcinogens in cigarette tobacco and smoke by the cigarette manufacturers".

US 2011/083683 A1 discloses a process for treating a tobacco material comprising the steps of: (a) extracting a tobacco material with a solvent to produce a tobacco extract and a tobacco residue; (b) contacting the tobacco extract with an antioxidant; and (c) contacting the mixture of (b) with an antioxidant scavenger, to produce a treated tobacco extract. The treated tobacco extract is reapplied to the tobacco residue to form a treated tobacco material.

WO 2004/068973 A2 discloses a method for increasing the concentration of antioxidants during senescence and curing of tobacco leaves including application of a chemical solution. The method includes spraying the solution onto the tobacco plant prior to harvest and/or applying the chemical solution to the soil surrounding roots of growing tobacco plants to interfere with the formation of TSNAs during curing.

### SUMMARY OF THE INVENTION

The aim of the present invention is to provide a method for making tobacco overcoming the above mentioned prior art drawbacks.

Within the scope of the above mentioned aim, a main object of the invention is to provide such a tobacco making method based on a use of a vegetable natural extract or standardized fractions thereof, with anti-oxidating characteristics.

According to the invention, there is provided a method for processing tobacco to provide a processed tobacco with a reduced contents of tobacco nitrosamines. as defined in the appended claims.

### BRIEF DESCRIPTION OF THE DRAWINGS

Further characteristics and advantages of the present invention will become more apparent hereinafter from the following detailed disclosure of a preferred, though not exclusive, embodiment of the invention which is illustrated, by way of an indicative but not limitative example, in the accompanying drawings, where:
Figure 1 shows a chromatographic profile related to the chestnut wood fraction 6 liquid extract, recorded at 280 nm;
Figure 2 shows a chromatographic profile related to a chestnut wood spray dried extract aqueous solution, recorded at 280 nm;
Figure 3 is a table showing a method by which apical leaves of a Virginia Bright cv. VFC-ITB678 cultivation, derived from the fourth harvesting, have been subdivided in 7 samples with two replications, in Example 2;
Figure 4 shows data related to the nitrosamine contents of one of the samples of the first analysis series (L series), in Example 2;
Figure 5 shows a chromatographic profile related to a hydroalcoholic extract of a CHV01 sample (specimen) acquired at 254 nm (at the top) and 330 nm (at the bottom);
Figure 6 is a qualitative-quantitative analysis table of the individual secondary metabolites and nicotine present in hydroalcoholic extracts achieved from samples of Example 4;
Figure 7 shows a histogram of total flavonolic derivative and total hydroxycinnamic derivative contents for a series-CHV Virginia Bright tobacco sample;
Figure 8 shows a histogram of total flavonolic derivative and total hydroxycinnamic derivative contents for a series-PV Virginia Bright tobacco sample;
Figure 9 shows a histogram of total flavonolic derivative and total hydroxycinnamic derivative contents for a series-RB Burley tobacco sample;
Figure 10 shows a histogram of total flavonolic derivative and total hydroxycinnamic derivative contents for a series-BEB Burley tobacco sample;
Figure 11 is a table showing the TSNA contents as measured on samples of Example 2; and
Figure 12 is a further table showing the TSNA contents as measured on samples of Example 4.

### DESCRIPTION OF THE PREFERRED EMBODIMENTS

As is known, a chestnut tannin extract is characterized by the presence of hydrolysable tannins, generally consisting of phenolic groups such as gallic and ellagic acids, either partially or fully esterified with a D-glucose molecule: the anti-oxidating activity of the aqueous extract, as determined by a FRAP test (a reduction of the tripiridyltriazine/Fe(III) complex to a ferrous blue form, with an increase of absorbancy at 593 nm) is larger than 3,500 nmole equivalents of ascorbic acid per mg of extract. The product and standardized fractions thereof also provide a weak antimycotic and antimicrobic action.

It has been surprisingly found that an application on tobacco of a chestnut tannin extract in water, or of standardized fractions thereof, performed during the growth on the field of the tobacco plants up to the harvesting thereof, or after their harvesting, at the packaging in baskets where the Virginia Bright tobacco is cured (by a flue-curing method), or at the formation of the whole Burley tobacco leaf or plant strings in the tobacco air curing sheds, or immediately before or during the Kentucky tobacco fire curing and successively in the time period from the curing to the finished product manufacturing, reduces the TSNA formation, without modifying the other extrinsic (such as tobacco leaf color, consistency and aroma) and intrinsic characteristics (for example the nicotine and reducing sugar contents) of tobacco, the ripening degree being the same. The TSNAs are determined by a method disclosed by Li et al. in J. Agronomy & Crop Science 192, 267 - 277 (2006).

Differently from other anti-oxidating substances proposed so far, the chestnut tannin extract or standardized fractions thereof are moreover characterized by aromas which do not alter the natural taste of tobacco, with substantial technological advantages. Moreover, said extracts are already used products, even if for other purposes, in an agricultural tobacco cultivation, for example for adjusting ground and irrigation water pH and as growth stimulating agents, as disclosed, for example, in the documents EP 1,464,635 (A1) of August 26, 2003 and EP 2,345,628 (A1) of January 14, 2011, respectively in the name of Nuova Rivart S.p.A., at present joined to the present Applicant, and of Sadepan Chimica S.p.A., pertaining to the Saviola holding. The present patent application being, for all intended effects, a continuation and development of the above mentioned patent applications.

In the present invention, without limiting further possible uses, the chestnut tannin extract is used in a liquid form of 1-37% tannin and fractions thereof, and preferably 13%. These products may be delivered: 1) on the ground near the tobacco plants, in subsequent growth stages on the seedbed and field, conveyed by irrigation water or a specifically prepared fertilizing material; 2) to the tobacco plant (as a whole harvested plant) or to the tobacco leaves (harvested in crowns) in a period before the overall harvesting and more specifically during the plant clipping operations and in a period from 10 days before harvesting to immediately before the harvesting proper, and more specifically from 3 to 1 days before harvesting. In case of an harvesting in subsequent harvesting crowns, the application number will correspond to the harvesting operation number. For a whole plant harvesting, a single delivery is performed; 3) to the whole tobacco plant or leaves, as harvested for a subsequent tobacco cure depending on the different tobacco types: flue-cured, air-cured, fire-cured and sun-cured (oriental tobaccos). In some tobacco types, such as Virginia Bright, Burley and Kentucky, the treatments may also be performed by successive working steps, that is from the curing to the finished product manufacture, for example in the so-called "beating" steps (separation of the leaf sheet or web from the leaf rib).

If the applications are made on the soil near the tobacco plants, either directly or through irrigation water or a fertilizer material, the chestnut tannin extract or fractions thereof, in a 13% solution, are applied with a concentration from 0.1 to 50%, and preferably from 5 to 10%, by administering, during the tobacco growing cycle, in several treatments, up to 50 kg/ha tannins.

For an application to the whole tobacco plant or leaves before the harvesting, concentrations from 0.1 to 5%, and preferably from 1 to 3%, are used, by delivering, in subsequent treatments before the single harvesting operations, up to 20 kg/ha tannins.

Finally, if the application is performed on harvested tobacco, the concentrations are from 0.5 to 10%, and preferably from 1 to 5%. In this case, up to 50 ml solution per square meter of leaf surface, corresponding to about 0.65 g tannin or fractions thereof, are applied.

For applications to the soil, the chestnut tannin extract or fractions thereof are preferably diluted in irrigating water or in a liquid fertilizer, by a conventional mixing apparatus, and are delivered, for example, by a micro-irrigating method.

If the carrier comprises a solid fertilizer, the latter is preferably spread on the tobacco plants, for increasing its absorption.

For applications to the tobacco leaves, both in a pre- and in a post-harvesting operation, the chestnut tannin extract and fractions thereof are sprayed by conventional spraying apparatus used in agricultural farms, spraying the liquid products by atomizing them, thereby increasing the contact surface between the drops and leave surface.

The following examples are disclosed only for illustrating the present invention and they are not limitative of the invention scope, which is defined by the enclosed claims.

### EXAMPLE 1

### An example related to a fractioning of the chestnut tannin extract and usable fractions thereof

Samples obtained from a chestnut wood hot aqueous extraction and cool fractioning system by membrane methods have been analyzed.

In particular, the following fractions have been examined:
Filtered tannic broths;
Nanofiltration permeate I;
Nanofiltration concentrate I;
Nanofiltration concentrate II;
Nanofiltration permeate II;
Nanofiltration concentrate III;
Osmosis permeate;
Osmosis concentrate;
Clarifying sediments.

For performing a HPLC analysis a Luna C18 250x4.60 mm, 5µm column (Phenomenex, Torrance, CA), with a movable phase consisting of H20 (pH 3.2 for HCOOH), (A) and CH3CH (B), has been used. A four-step linear gradient, with a 0.8 mL/min flow rate, for 55 minutes, has been applied. The used elution profile was as follows: at the start 100% A, then the solvent A has been brought to 85% in 20 min, while holding it constant for 5 min, decreased to 75% in 10 min, further held constant for 8 min, finally recovered to 0% (100% B) in 5 min and held constant for 4 min to recover the starting condition within 3 min. The gallic derivatives have been calibrated by gallic acid to 280 nm, and the ellagic derivatives have been calibrated by ellagic acid to 254 nm.

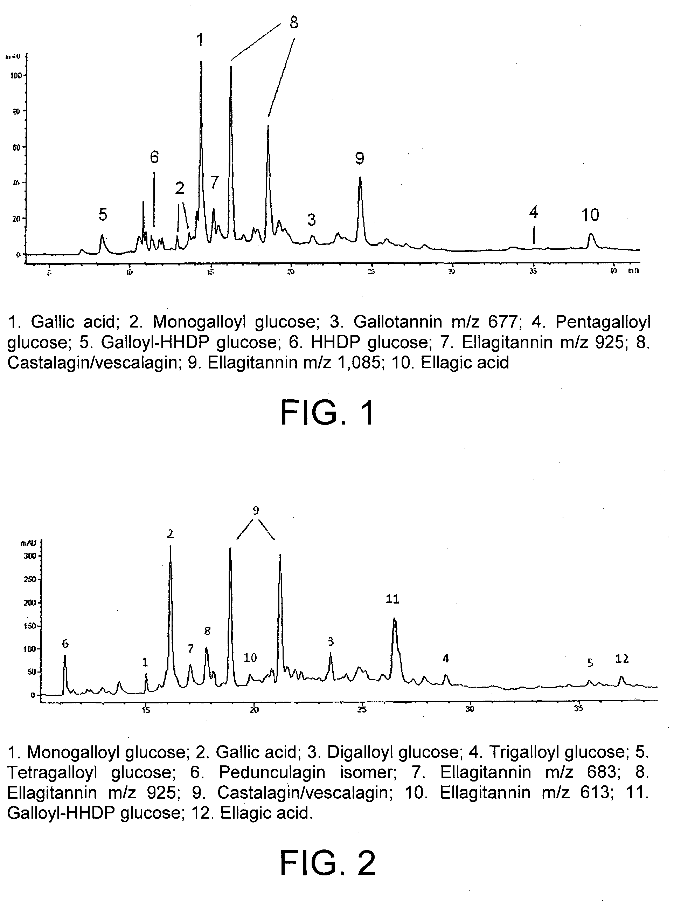

Figures 1 and 2 show, by way of an example, the chromatographic profiles related to two fractions: the first one, a liquid fraction, obtained by a nanofiltering concentration (fraction 6), with a specific weight of 1.06 (Fig. 1), the second one obtained by spray drying the first one (Fig. 2).

The reference numbers shown in Fig. 1 are related to the following components: 1. Gallic acid; 2. Monogalloyl glucose; 3. Gallotannin m/z 677; 4. Pentagalloyl glucose; 5. Galloyl-HHDP glucose; 6. HHDP glucose; 7. Ellagitannin m/z 925; 8. Castalagin/vescalagin; 9. Ellagitannin m/z 1,085; 10. Ellagic acid.

The reference numbers of Fig. 2 relate to the following components: 1. Monogalloyl glucose; 2. Gallic acid; 3. Digalloyl glucose; 4. Trigalloyl glucose; 5. Tetragalloyl glucose; 6. Pedunculagin isomer; 7. Ellagitannin m/z 683; 8. Ellagitannin m/z 925; 9. Castalagin/vescalagin; 10. Ellagitannin m/z 613; 11. Galloyl-HHDP glucose; 12. Ellagic acid.

In addition to the above two fractions, other fractions derived from the same membrane making methods have been analyzed.

### EXAMPLE 2

### Application at a post-harvesting operation on V. Bright tobacco, carried out at Fattoria Autonoma Tabacchi, located at Città di Castello (PG) - IT (cultivator in the "Città di Castello" area)

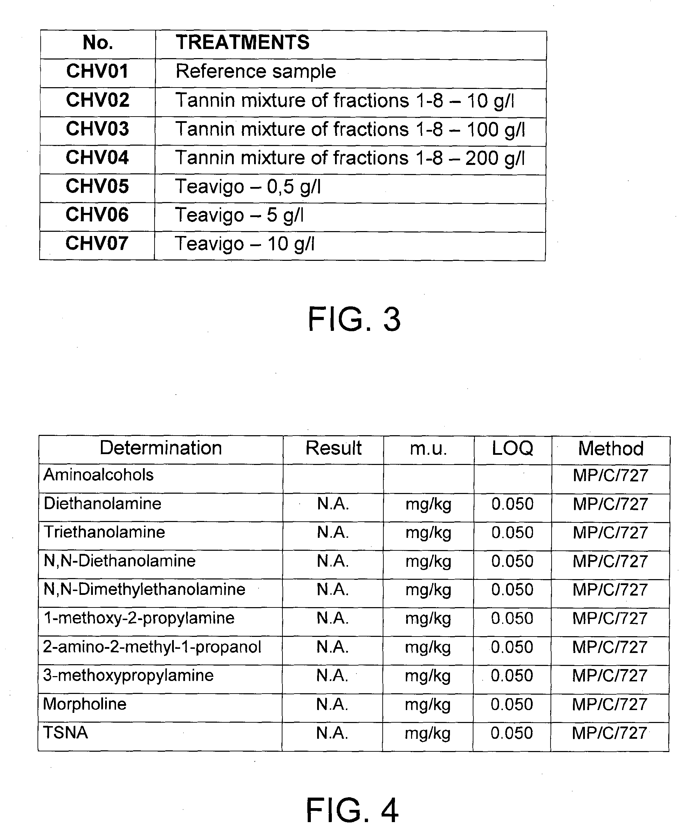

As shown in the Table of Figure 3, the apical leaves of a Virginia Bright cv. VFC-ITB678 cultivation, obtained from the fourth harvesting, have been subdivided in 7 samples, with two replications, subjected to the disclosed experimental treatments, and cured by a suitable curing method as known to those skilled in the art.

The Teavigo, a concentrated extract of green tea used in the biomedical field and in functional food articles, essentially consists of condensate tannin galloilate monomers having a concentration of 97% (HPLC); accordingly, a concentration of 5 g/l is equivalent to about 10 mM tannins.

The Teavigo has been specifically selected for these experimentations because of its well known antimicrobic and antimycotic activities on microorganisms of biomedical and food interest.

The chestnut tannin is a mixture of 1-8 fractions with a tannin titre or contents of 4.6% (HPLC); accordingly, a 115 g/l concentration is equivalent to about 10 mM tannins.

Hereinbelow a method for preparing analysis or testing samples will be disclosed.

Weighing for hot aqueous washings and extracts:
CHV01: 752.1 mg
CHV02: 752.6 mg
CHV03: 752.0 mg
CHV04: 749.8 mg
CHV05: 751.4 mg
CHV06: 749.6 mg
CHV07: 750.6 mg
CHV05 for decoction without washing: 751.7 mg

The weighted samples have been cut into small size pieces.

### Washings:

Samples 1-7 have been put in a flask and washed by manually stirring for about 2'30" with 10.0 mL millipore water. The washing water has been sucked through a pipette, and then a precise volume of the washing solution has been concentrated 5:1, centrifuged and put in a vial.

### Hot aqueous extracts:

The washed samples have been let to dry, and then held in a boiling condition under stirring, with 50.0 mL millipore water for 15'. The extracts thus obtained have been cooled, filtered under a reduced pressure, brought to a precise volume, centrifuged and put in a vial for HPLC/DAD/ESI-MS analysis.

### Hot aqueous extracts without washing:

Sample No. 8 (a further CHAV05 weighing) has been put in a flask, without washing it, with 50.0 mL millipore water and held under a boiling condition for 15', and then cooled and filtered under a reduced pressure. Then, it has been brought to a precise volume and put in a vial.

### Hydroalcoholic extracts:

For each sample (CHV01-CHV07), 1.0 g of a vegetable material has been weighted. The weighted material has been cut into small pieces and stirred in 50.0 mL EtOH/H20 70:30 at a pH 3.2 for formic acid.

After 20 h, the samples were filtered under a reduced pressure, brought to a precise volume and put in a vial.

By the above preparing methods, the following samples have been prepared:
Washings: CHV01L, CHV02L, CHV03L, CHV04L, CHV05L, CHV06L, CHV07L (L series).
Hot aqueous extracts after washing: CHV01D, CHV02D, CHV03D, CHV04D, CHV05D, CHV06D, CHV07D (D series).
Hot aqueous extract without washing: CHV05DT.
Hydroalcoholic extracts: CHV01E, CHV02E, CHV03E, CHV04E, CHV05E, CHV06E, CHV07E (E series).
QUALITATIVE-QUANTITATIVE HPLC/DAD AND HPLC/DAD/MS ANALYSES

These analyses have been carried out to evaluate the contents of the processed tobacco leaves, both in nicotine, nitrosamines and in particular TSNA (Tobacco Specific NitrosAmines), and in secondary metabolites produces by the tobacco plant.

The HPC/DAD/MS HPLC analysis has been carried out by using a Luna C18 250x4.60 mm, 5µm column (Phenomenex, Torrance, CA). The movable phase herein used consists of H20 acidified to a pH 3.2 for HCOOH (A) and CH3CN (B). A four-ramp or step linear gradient has been herein applied, with a 0.8 mL/min flowrate for 55 minutes. The following elution profile has been used: at the start 100% A, then the A solvent has been brought to 85% in 20 min, held constant for 5 min, decreased to 75% in 10 min, held constant for 8 min, finally recovered to 0% (100% B) in 5 min. The hydroxycinnamic derivates have been calibrated to 330 nm, the flavonolic derivatives to 350 nm and nicotine and related derivatives to 254 nm.

Figure 4 shows, by way of an example, data related to the nicotine and nitrosamine contents of one of the samples of the first analysis series (L series).

For the chemical parameters, the extended uncertainty values are referred to a 95% confidence range.

The determining limit (LOD) is equal to 1/10LOQ*3.

N.D. = less than LOQ (the quantifying limit).

The nitrites, nitrosamine precursors, do not form as the polyphenolic antioxidating materials, hydroxycinnamic acids and flavonoids have a high qualitative-quantitative contents. The procedure used consisted of evaluating the molecule amount, applied through a surface processing, consumed by each sample during the curing time and the total contents and individual molecules of present antioxidating metabolites. Usually, a non-processed sample has a smaller contents of protective antioxidating materials, the qualitative-quantitative contents of which increase through the different processed samples, with different treatment levels.

It has been found that all the samples had a hygienic-safety nitrosamine contents less than a legal threshold, thereby the method according to the present invention provides very good qualitative and hygienic characteristics of the samples through the time. Moreover, it is possible to say that a positive increase of the antioxidating materials which are naturally present in tobacco provides, by a synergistic type of activity, a protection, over time, of tobacco samples, by preventing the nitrosamine contents from increasing during the tobacco storing periods.

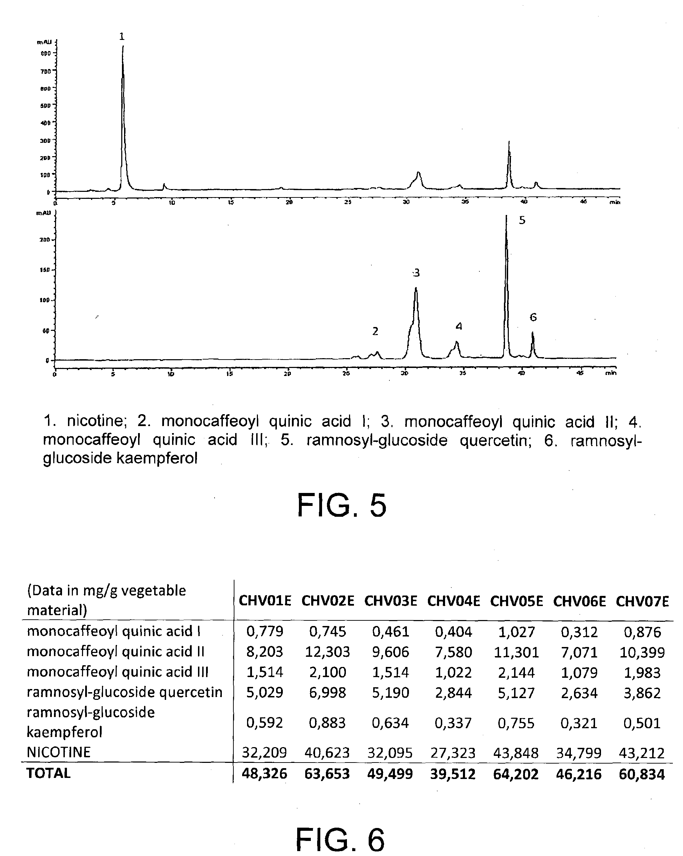

Figure 5 shows, by way of an example, the chromatographic profile of a hydroalcoholic extract of tobacco leaves cured without adding a tannin solution (a reference sample CHV01) with the wordings related to the identified compounds.

The reference numbers in Figure 5 show the following components: 1. nicotine; 2. monocaffeoyl quinic acid I; 3. monocaffeoyl quinic acid II; 4 monocaffeoyl quinic acid III; 5. ramnosyl-glucoside quercetin; 6. ramnosyl-glucoside kaempferol.

As shown in the Tables in Figure 5 and Figure 6, the disclosed analysis method allows to identify and quantify alkaloids present in tobacco leaves as well as polyphenolic substances having an antioxidating and antiradical activity. The individual derivatives have been calibrated by specifically designed calibrating curves according to the above disclosed method, thereby providing quantitative data related both to the individual compounds and to the chemical sub-classes.

In the Table of Figure 6 is shown a qualitative-quantitative analysis of the individual secondary metabolites and nicotine of hydroalcoholic extracts derived from the examined samples, the data being expressed in milligrams per gram of sampled vegetable material.

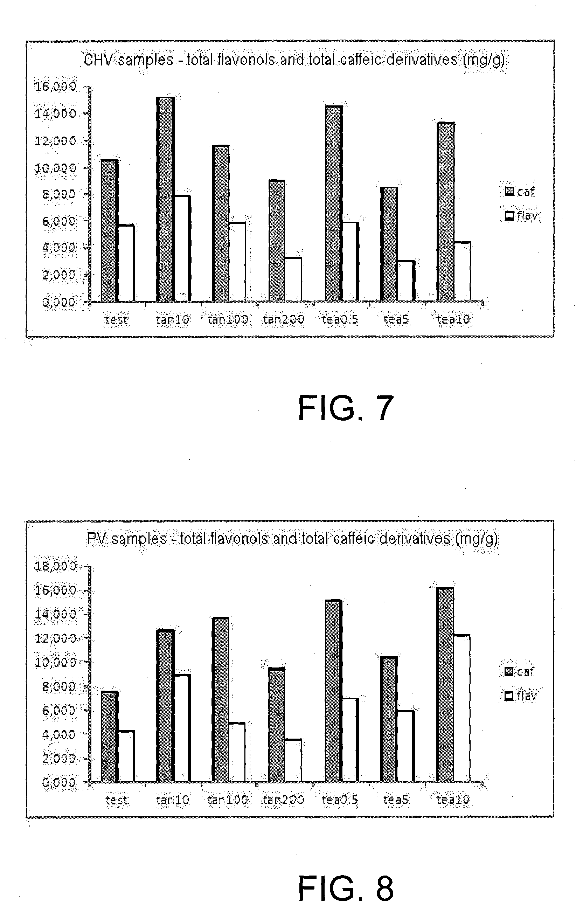

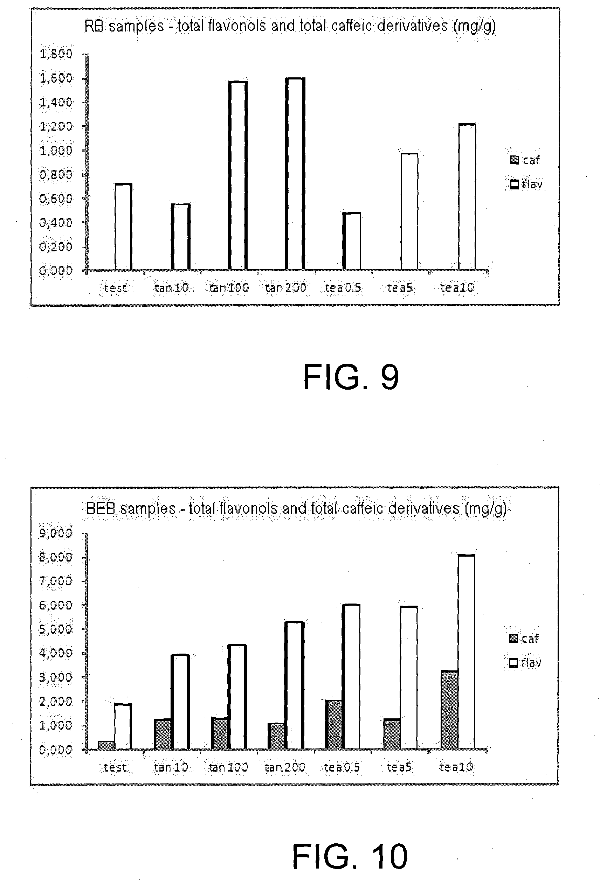

The histograms in Figures 7-10 show the total flavonolic derivative and total hydroxycinnamic derivative contents evaluated for four series of samples, the first two of which (the CHV and PV series) consist of Virginia Bright tobacco leaves whereas the other two (RB and BEB series) consist of Burley tobacco leaves.

The analyses or tests have been carried out by the same method disclosed for the tobacco leaf hydroalcoholic extracts after the curing process, and the results are expressed in polyphenol milligrams per gram of vegetable material.

Each one of the four examined series is a tobacco sample series on which have been carried out six different treatments by chestnut tannin solutions, Teavigo and green tea solutions (10, 100, 200 g/L and 0.5, 5.0, 10.0 g/L, respectively). The flavonolic and hydroxycinnamic derivatives are both present in all the samples with the exception of the "RB" series samples, wherein the hydroxycinnamic derivatives are only present in traces. The nicotine contents, for the four analyzed series, varies from 12 to 43 mg/g vegetable material.

### TSNA CONTENTS - the method disclosed by Li et al., 2006

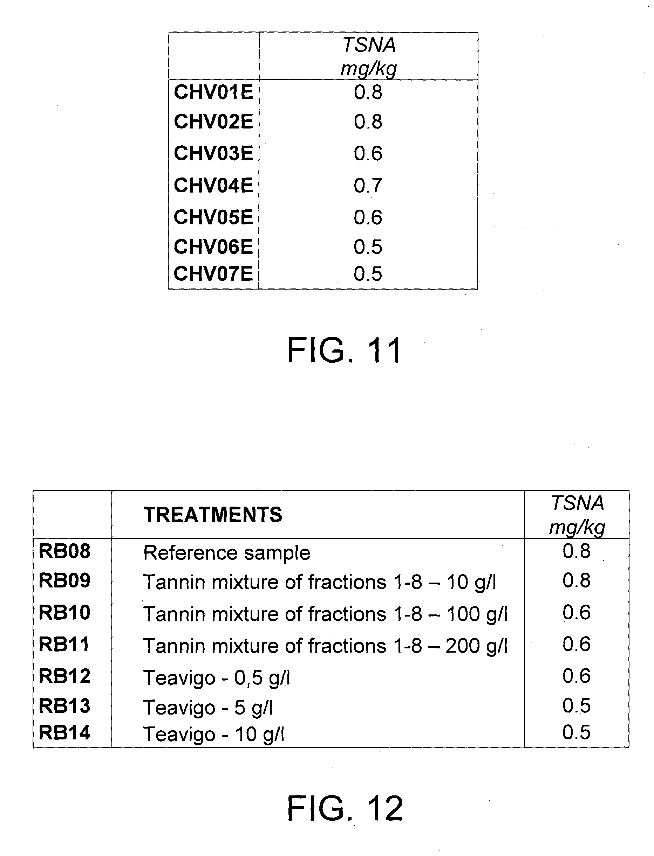

The Table in Figure 11 shows the achieved results indicating that, by the carried out treatments, a total TSNA content decrease in comparison with a reference sample has been obtained.

### EXAMPLE 3

### A post-harvesting application on V. Bright tobacco carried out by 3 farmers (called F, B and S) in the Città di Castello area

The chestnut tannin used in this test is a concentrated liquid extract (fraction 6, concentrated from nanofiltering III as in the Example 1) diluted to a concentration of 10 mM polyphenols.

The table here below shows the qualitative-quantitative analyses performed for characterizing the individual tobacco components.

| | **mmoles/g** | **mg/g** |
|---|---|---|
| monogalloyl glucose I | 0.007 | 2.225 |
| gallic acid | 0.036 | 6.175 |
| monogalloyl glucose II | 0.006 | 2.047 |
| digalloyl glucose I | 0.008 | 3.660 |
| digalloyl glucose II | 0.018 | 8.522 |
| tetragalloyl glucose | 0.009 | 7.472 |
| pentagalloyl glucose | 0.010 | 9.179 |
| *total gallotannins* | *0.094* | *39.280* |
| castalin/vescalin isomer I | n.a. | n.a. |
| castalin/vescalin isomer II | n.a. | n.a. |
| pedunculagine isomer | n.a. | 0.150 |
| HHDP-glucose (to be determined) | n.a. | 0.306 |
| Castalagin/vescalagin I | 0.013 | 11.709 |
| Castalagin/vescalagin II | 0.010 | 9.247 |
| Ellagitannin m/z 543 (to be determined) | 0.011 | 6.218 |
| Ellagic acid | 0.002 | 0.690 |
| *Total ellagitannins* | *0.037* | *28.321* |
| **Total** | **0.131** | **67.601** |

Application dosing on apical leaves of Virginia Bright tobacco: 50 ml of the above 10 mM solution for each m² leaf surface immediately before the curing inlet.

Immediately after application, the apical tobacco leaves under test have been cured according to a proper method, well known to one skilled in the art.

### HPLC/DAD/MS qualitative/quantitative analysis

For each sample, a hydro-alcoholic extract has been prepared by chopping and weighing 1.0 g cured leaves and by stirring for 24 h in 50.0 ml EtOH/H20 solution, pH 3.2 for HCOOH. Then each extract has been filtered under a reduced pressure, and brought to a set volume and arranged in an analysis vial (1:1).

Analyses have been performed to evaluate the contents of the tobacco leaves treated in TSNA (Tobacco Specific NitrosAmines).

They have been carried out by a HP-1100 liquid chromatograph with a DAD detector, a HP 1100 MSD API-electrospray mass spectrometer (Agilent Technologies) and a Luna C18 250x4.60 mm, 5 µm column (Phenomenex, Torrance, CA). The mobile phase consists of H20 (pH 3.2 for HCOOH) (A) and CH3CN (B). A four ramp linear gradient has been applied, with a 0.8 mL/min flow for 55 min. The elution profile used is as follows: at the start 100% A, then the A solvent has been brought to 85% in 20 min, held constant for 5 min, decreased to 75% in 10 min, held constant for 8 min, and finally recovered to 0% (100% B) in 5 min and further held constant for 4 min to finally recover it to the starting condition in 3 min. The mass spectrometer operates with a gas at a temperature of 350°C and a flow rate of 10.0 L/min, with a nebulizer pressure of 30 psi, quadripole temperature 30°C and capillary voltage 3500 V. The crusher operates at 120 eV, with a positive ionizing mode of operation. The individual compounds have been identified by evaluating the holding times and spectroscopic and spectrometric data, by comparing them with suitable standards. The quantifying has been performed through HPLC/DAD with 5-point calibrating curves, built-in with a specific standard with r2 > 0.9998 at a maximum absorption wavelength. The coffee derivatives have been calibrated at 330 nm by coffee acid or chlorogenic acid, the nicotine and derivatives at 254 nm with nicotine, the flavonolic derivatives at 350 nm with kaempferol or quercetin. Individual TSNAs have been detected by the method disclosed by Li et al. in J. Agronomy & Crop Science 192, 267-277 (2006).

### Analysis of the samples treated in the curing process

As shown in the Table below, the samples corresponding to the three replications have been subjected to a controlled curing process by treating them by a tannin solution and then comparing with an analogous control sample, while analyzing the individual nitrosamines.

### TSNA AND SINGLE NITROSAMINE ANALYSES (mg/kg)

| **Thesis** | **NNN** | **NAT** | **NAB** | **NNK** | **NNO** | **Tot. TSNA** |
|---|---|---|---|---|---|---|
| FARMER F | | | | | | |
| Control | 0.180 | 0.443 | n.a. | n.a. | 0.270 | 0.893 |
| Treated by Tannin | 0.102 | 0.236 | n.a. | n.a. | 0.218 | 0.556 |
| % decreasing of total TSNA | | | | | | 37.7 |
| FARMER B | | | | | | |
| Control | 0.165 | 0.421 | n.a. | n.a. | 0.191 | 0.777 |
| Treated by Tannin | 0.090 | 0.286 | n.a. | n.a. | 0.214 | 0.572 |
| % decreasing of total TSNA | | | | | | 26.4 |
| FARMER S | | | | | | |
| Control | 0.209 | 0.498 | n.a. | n.a. | 0.276 | 0.983 |
| Treated by Tannin | 0.111 | 0.376 | n.a. | n.a. | 0.309 | 0.796 |
| % decreasing of total TSNA | | | | | | 19.0 |

The following Table clarifies the meanings of the abbreviations shown in the preceding Table.
NNN = N'-nitrosonornicotine
NAT = N'-nitrosoanabatine
NAB = N'-nitrosoanabasine
NNK = 4-(N-methyl-N-nitrosoamino)-1-(3-piridyl)-1-butanone
NNO = 4-methyl-nitrosoamino-1-(3-piridyl)-1-butanol

From the data shown for 3 tannin treated samples a decreasing of TSNA from 19 to 37% should be well apparent.

### EXAMPLE 4

### An application, after harvesting, on Burley tobacco carried out at Fattoria Autonoma Tabacchi in Città di Castello (a cultivator in the Caserta area).

In the post-harvesting treatment, and immediately after the preparing of the tobacco leaf strings suspended in suitable curing sheds, the experimental processes have been carried out with the intended concentrations and doses, while comparing chestnut hydrolyzable tannins and green tea condensate tannins.

The Table in Figure 12 shows the achieved results, from which it is possible to see that, because of the carried out treatments, the total TSNA contents decreases in comparison with the reference sample.

Moreover, said results show that the tobacco being studied, even in non treatment conditions, has a low nitrosamine contents, also according to scientific studies on Caserta Burley having TSNA values less than 1 ppm (Monitoraggio del contenuto in nitrosamine nel tobacco Burley, M.I. Sifola, Deltafina S.p.A., a project financed in 2007 with data disclosed in 2010).

The disclosed analytic method, accordingly, allows to identify and correspondingly quantify both alkaloids and two different polyphenolic secondary metabolite subclasses with remarkable antioxidating and antiradical properties, such as the flavonolic and hydroxycinnamic derivatives.

It has been found that the invention fully achieves the intended aim and objects.

In fact, as disclosed in the introductory part of the disclosure, the flavonoic and caffeic derivatives have a high antioxidating and antiradical capability.

Thus, the method according to the present invention allows not only to quantify alkaloids but also to evaluate the total antioxidating activity and total antiradical activity on the leaves of the two analyzed tobacco varieties.

## Claims

1. A method for processing tobacco to provide a processed tobacco with a reduced content of tobacco nitrosamines, wherein said method does not modify the extrinsic, such as tobacco leaf color, consistency and aroma, and intrinsic, such as tobacco nicotine and reducing sugar contents, tobacco characteristics, while preserving unaltered the natural taste of tobacco, wherein said method comprises
- applying chestnut hydrolyzable tannin extracts or fractions thereof to the soil, near the tobacco plants, as conveyed by irrigation water or a fertilizing material; either to a whole tobacco plant or tobacco leaves in a pre-harvesting operation or either to a whole tobacco plant or tobacco leaves in a post-harvesting operation, thereby providing a processed tobacco having a nitrosamine content reduced in comparison with a non-processed tobacco.

2. A method according to claim 1, **characterized in that** said chestnut tannin extracts or fractions thereof are exclusively concentrated by physical means, without using chemical additives.

3. A method according to claim 2, **characterized in that** said physical means consist of a reverse osmosis and nanofiltration.

4. A method according to claim 1, **characterized in that** said chestnut tannin extracts or fractions thereof are applied to the soil, near the tobacco plants, as conveyed by irrigation water or a fertilizing material.

5. A method according to claim 1, **characterized in that** said chestnut tannin extracts or fractions thereof are applied either to a whole tobacco plant or tobacco leaves in a pre-harvesting operation.

6. A method according to 4, **characterized in that** said chestnut tannin extracts or fractions thereof are applied to said soil as an aqueous solution having a concentration from 0.1 to 50%, preferably from 5 to 10%, in several operations during the tobacco growing cycle.

7. A method according to claim 5, **characterized in that** said chestnut tannin extracts or fractions thereof are applied either to said whole tobacco plant or said tobacco leaves as an aqueous solution with a concentration from 0.1 to 5%, and preferably from 1 to 3%, in successive treatments before each tobacco harvesting operation.

8. A method according to claim 6, **characterized in that** said chestnut tannin extracts or fractions thereof are applied either to a whole tobacco plant or tobacco leaves in said post-harvesting operation as an aqueous solution with a concentration from 0.5 to 10% and preferably from 1 to 5%, after tobacco harvesting.

9. A method according to claims 7 and 8, **characterized in that** said method comprises a step of applying up to 50 ml of said aqueous solution per square meter of tobacco leaf surface.

10. A method according to claim 1, **characterized in that** said tobacco is of a flue-cured, air-cured, fire-cured or sun-cured type or a mixture thereof.

11. A method according to claim 1, **characterized in that** said post-harvesting operation includes preparing tobacco to be cured, curing the prepared tobacco, preserving the cured tobacco and performing all manufacturing processing steps to provide tobacco based commercial products either per se or in a mixture with other components.

## Patentansprüche

1. Verfahren zum Verarbeiten von Tabak, um einen verarbeiteten Tabak mit einem reduzierten Gehalt an Tabak- Nitrosaminen zu liefern, wobei das Verfahren nicht die äußere Konsistenz, z.B. die Tabakblattfarbe, und das Aroma, und innere Tabakcharakteristika, wie zum Beispiel Tabaknikotin, und den Riduktionszuckergehalt, während der natürliche Geschmack von Tabak unverändert erhalten bleibt, wobei das Verfahren umfasst
das Aufbringen von hydrolysierbaren Kastanien-Tanninextrakten oder Fraktionen derselben auf den Boden, in der Nähe der Tabakpflanzen, wie durch Bewässerungswasser oder ein Düngematerial übermittelt; entweder auf eine ganze Tabakpflanze oder Tabakblätter in einer Operation vor der Ernte oder entweder auf eine ganze Tabakpflanze oder Tabakblätter in einer Operation nach der Ernte, wodurch für einen verarbeiteten Tabak gesorgt wird, der einen Nitrosamin-Gehalt hat, welcher im Vergleich zu nichtverarbeitetem Tabak reduziert ist.

2. Verfahren nach Anspruch 1, **dadurch gekennzeichnet, dass** die Kastanien-Tanninextrakte oder Fraktionen derselben ausschließlich durch physikalische Mittel konzentriert werden, ohne die Verwendung von chemischen Zusätzen.

3. Verfahren nach Anspruch 2, **dadurch gekennzeichnet, dass** die physikalischen Mittel aus einer Umkehrosmose und Nanofiltration bestehen.

4. Verfahren nach Anspruch 1, **dadurch gekennzeichnet, dass** die Kastanien-Tanninextrakte oder Fraktionen derselben auf den Boden nahe den Tabakpflanzen aufgebracht werden, wie durch Bewässerungswasser oder ein Düngematerial übertragen.

5. Verfahren nach Anspruch 1, **dadurch gekennzeichnet, dass** die Kastanien-Tanninextrakte oder Fraktionen derselben entweder auf eine ganze Tabakpflanze oder Tabakblätter in einer Operation vor der Ernte aufgetragen werden.

6. Verfahren nach Anspruch 4, **dadurch gekennzeichnet, dass** die Kastanien-Tanninextrakte oder Fraktionen derselben auf den Boden als eine wässrige Lösung, die eine Konzentration von 0,1 bis 50 %, vorzugsweise von 5 bis 10 % hat, in mehreren Arbeitsgängen während des Tabakwachstumszyklus aufgetragen werden.

7. Verfahren nach Anspruch 5, **dadurch gekennzeichnet, dass** die Kastanien-Tanninextrakte oder Fraktionen derselben entweder auf die ganze Tabakpflanze oder die Tabakblätter als wässrige Lösung mit einer Konzentration von 0,1 bis 5 % und vorzugsweise von 1 bis 3 % in aufeinanderfolgenden Behandlungen vor jeder Tabakernteaktion aufgetragen werden.

8. Verfahren nach Anspruch 6, **dadurch gekennzeichnet, dass** die Kastanien-Tanninextrakte oder Fraktionen derselben entweder auf eine ganze Tabakpflanze oder Tabakblätter in der Nachernteaktion als wässrige Lösung mit einer Konzentration von 0,5 bis 10 % und vorzugsweise von 1 bis 5 % nach der Tabakernte aufgetragen werden.

9. Verfahren nach den Ansprüchen 7 und 8, **dadurch gekennzeichnet, dass** das Verfahren einen Schritt des Auftragens von bis zu 50 ml der wässrigen Lösung pro Quadratmeter der Tabakblattoberfläche umfasst.

10. Verfahren nach Anspruch 1, **dadurch gekennzeichnet, dass** der Tabak ein heißluftgetrockneter, luftgetrockneter, feuergetrockneter oder sonnengetrockneter Typ oder eine Mischung derselben ist.

11. Verfahren nach Anspruch 1, **dadurch gekennzeichnet, dass** die Operation nach der Ernte das Vorbereiten des zu trocknenden Tabaks, Trocknen des vorbereiteten Tabaks, Aufbewahren des getrockneten Tabaks und Ausführen aller Herstellungsverarbeitungsschritte umfasst, um kommerzielle Produkte auf Tabakbasis entweder an sich oder in einer Mischung mit anderen Komponenten zu liefern.

## Revendications

1. Procédé pour traiter du tabac pour fournir un tabac traité avec une teneur réduite en nitrosamines du tabac, dans lequel le procédé ne modifie pas des caractéristiques extrinsèques du tabac, telles une couleur des feuilles du tabac, une consistance et un arôme, et des caractéristiques intrinsèques du tabac, telles que la nicotine du tabac et des teneurs en sucre réducteur, tout en préservant de façon inaltérée le goût naturel du tabac, dans lequel ledit procédé comprend
- l'application d'extraits de tanin de châtaigne hydrolysables, ou des fractions de ceux-ci, au sol, près des plants de tabac, tels que transportés par de l'eau d'irrigation ou une matière fertilisante ; soit à un plant de tabac entier ou des feuilles de tabac dans une opération avant la récolte ou soit à un plant de tabac entier ou des feuilles de tabac dans une opération après la récolte, en fournissant de la sorte un tabac traité ayant une teneur réduite en nitrosamines en comparaison avec un tabac non traité.

2. Procédé selon la revendication 1, **caractérisé en ce que** lesdits extraits de tannin de châtaigne, ou fractions de ceux-ci, sont exclusivement concentrés par des moyens physiques sans utiliser des additifs chimiques.

3. Procédé selon la revendication 2, **caractérisé en ce que** lesdits moyens physiques consistent en une osmose inverse et une nanofiltration.

4. Procédé selon la revendication 1, **caractérisé en ce que** lesdits extraits de tanin de châtaigne, ou fractions de ceux-ci, sont appliqués au sol, près des plants de tabac, tels que transportés par l'eau d'irrigation ou une matière fertilisante.

5. Procédé selon la revendication 1, **caractérisé en ce que** lesdits extraits de tanin de châtaigne, ou fractions de ceux-ci, sont appliqués soit à un plant de tabac entier ou à des feuilles de tabac dans une opération avant la récolte.

6. Procédé selon la revendication 4, **caractérisé en ce que** lesdits extraits de tanin, ou fractions de ceux-ci, sont appliqués audit sol en tant qu'une solution aqueuse ayant une concentration de 0,1 à 50%, de préférence de 5 à 10%, en plusieurs opérations pendant le cycle de croissance du tabac.

7. Procédé selon la revendication 5, **caractérisé en ce que** lesdits extraits de tanin de châtaigne, ou fractions de ceux-ci, sont appliqués soit audit plant de tabac entier ou auxdites feuilles de tabac en tant qu'une solution aqueuse avec une concentration de 0,1 à 5%, et de préférence de 1 à 3%, en des traitements successifs avant chaque opération de récolte de tabac.

8. Procédé selon la revendication 6, **caractérisé en ce que** lesdits extraits de tanin de châtaigne, ou des fractions de ceux-ci, sont appliqués soit à un plant de tabac entier ou des feuilles de tabac dans ladite opération après la récolte en tant qu'une solution aqueuse avec une concentration de 0,5 à 10% et de préférence de 1 à 5% après la récolte du tabac.

9. Procédé selon les revendications 7 et 8, **caractérisé en ce que** ledit procédé comprend une étape d'application jusqu'à 50 ml de ladite solution aqueuse par mètre carré de surface de feuilles de tabac.

10. Procédé selon la revendication 1, **caractérisé en ce que** ledit tabac est de type séché à l'air chaud, séché à l'air ou séché au soleil, ou un mélange de cela.

11. Procédé selon la revendication 1, **caractérisé en ce que** ladite opération après la récolte comprend la préparation du tabac à traiter, le séchage du tabac préparé, la préservation du tabac traité et la réalisation de toutes les étapes de fabrication pour fournir des produits commerciaux à base de tabac soit en tant que tels, soit dans un mélange avec d'autres composants.
